# EUROPEAN PATENT APPLICATION

(11) **EP 1 733 928 A2**
(43) Date of publication of application: **20.12.2006**
(21) Application number: 06076152.5
(22) Date of filing: 02.06.2006
(51) Int. Cl.: B60R 21/015

(54) **Vehicle passenger detection apparatus with wireless acquisition of passenger-related data**

(30) Priority: 16.06.2005 US 154225
(71) Applicant: Delphi Technologies, Inc., Troy, Michigan 48007 (US)
(72) Inventor: Fultz, William W., Carmel, IN 46033 (US); Griffin, Dennis P., Noblesville, IN 46060 (US); Banney, William J., Kokomo, IN 46901 (US)
(74) Representative: Denton, Michael John

(57) **Abstract**

A vehicle passenger detection apparatus includes passive RF seat force sensors (18a-18d) at each seating location (14a-14d) and a single-point electronic control unit (ECU) (50) for wirelessly acquiring passenger-related data from each of the sensors. A sensor-loaded surface acoustic wave (SAW) device (34) is installed in each seating location (14a-14d) of the vehicle, and the ECU (50) successively interrogates the SAW devices (34) to determine passenger presence for each of the seating locations (14a-14d). The SAW devices (34) have distinguishable fundamental resonance frequencies for differentiation among the seating locations (14a-14d). A fluid-filled elastomeric bladder (16a-16d) is installed in the seat bottom (22) of each seating location (14a-14d), and a sensor pellet (18a-18d) including a capacitive pressure sensor (32) and a SAW device (34) is disposed in each bladder (16a-16d). The pressure sensor (32) capacitively loads the respective SAW device (34) so that when interrogated by the ECU (50), the SAW device (34) emits an RF response indicative of the fluid pressure in the bladder (16a-16d).

## Description

### TECHNICAL FIELD

The present invention relates to detecting the presence passengers in a motor vehicle passenger compartment, and more particularly to a low-cost detection apparatus utilizing wireless acquisition of passenger-related data.

### BACKGROUND OF THE INVENTION

Systems for detecting passenger presence in a motor vehicle are useful for determining if pyrotechnically deployed restraints such as air bags should be deployed in the event of sufficiently severe crash. Early systems focused primarily on the front passenger, but there is an increasing need to detect the presence of any passenger to ensure that various restraint devices of the vehicle are appropriately deployed. At the same time, there is great interest in minimizing the cost of the detection apparatus. Various systems and sensing technologies have been proposed for detecting passenger presence, but high system and installation costs have slowed their production usage. Accordingly, what is needed is a low-cost, easily installed passenger detection apparatus.

### SUMMARY OF THE INVENTION

The present invention is directed to an improved vehicle passenger presence detection apparatus including passive RF seat force sensors at each seating location and a single-point electronic control unit (ECU) for wirelessly acquiring passenger-related data from each of the sensors. According to the invention, a sensor-loaded surface acoustic wave (SAW) device is installed in each seating location of the vehicle, and the ECU wirelessly interrogates the SAW devices to determine passenger presence for each of the seating locations. The SAW devices have distinguishable fundamental resonance frequencies for differentiation among the seating locations.

In a preferred embodiment, a fluid-filled elastomeric bladder is installed in the seat bottom of each seating location, and a pelletized sensor including a capacitive pressure sensor and a SAW device is disposed in each bladder. Each pressure sensor capacitively loads the respective SAW device so that when interrogated by the ECU, the SAW device emits an RF response indicative of the fluid pressure in the respective bladder, and hence, the passenger seat force. The ECU also wirelessly communicates with car seat RFID tags to identify the presence and location of a car seat. The apparatus is inherently low in cost, as the sensors are inexpensive and passive, and no wiring is required between the sensors and the ECU.

### BRIEF DESCRIPTION OF THE DRAWINGS

FIG. 1A is an overhead diagram of a vehicle passenger compartment with multiple passenger seating locations and a wireless passenger detection apparatus according to this invention, including passive seat sensors and a centrally located electronic control unit (ECU);
FIG. 1B depicts the ECU and a passive seat sensor installed in a vehicle seat, plus an infant or child car seat disposed on the vehicle seat;
FIGS. 2A and 2B depict a passive seat sensor of FIGS. 1A-1B. FIG. 2A is a sectional view of the sensor and seat bladder, and FIG. 2B is a top view of the sensor;
FIG. 3 is a block diagram of the ECU of FIG. 1; and
FIG. 4 is a flow diagram representative of a software routine executed by the ECU of FIG. 1 according to this invention.

### DESCRIPTION OF THE PREFERRED EMBODIMENT

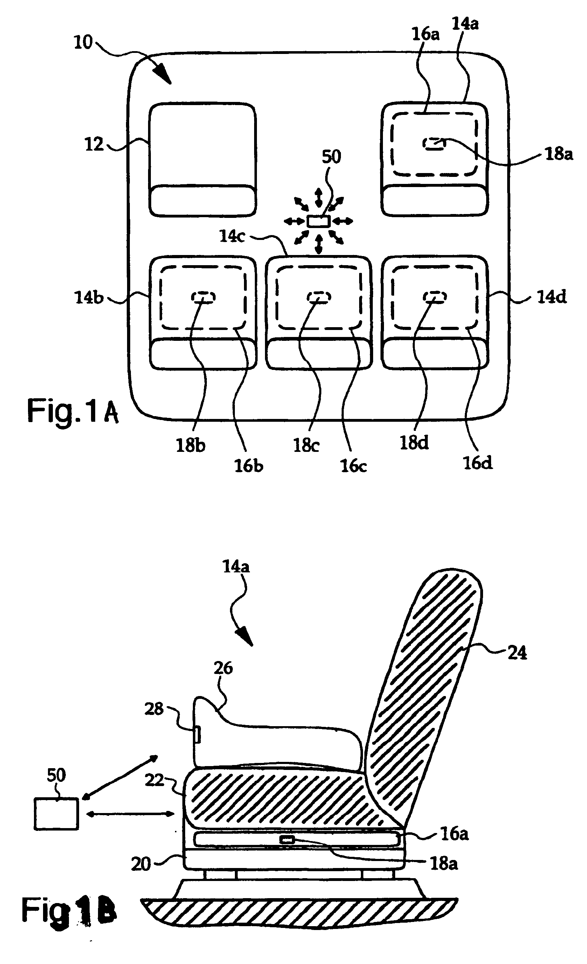

Referring to FIG. 1A, the present invention is illustrated in the context of a vehicle passenger compartment 10 having a driver seat 12 and four passenger seats 14a, 14b, 14c and 14d. Of course, other seating arrangements are possible, and the illustrated arrangement is merely exemplary. In the illustrated embodiment, the passenger detection apparatus of the present invention is applied to each of the passenger seats 14a-14d. Each of the passenger seats 14a, 14b, 14,c, 14d is equipped with a fluid-filled elastomeric seat bladder 16a, 16b, 16c, 16d and a passive RF sensor 18a, 18b, 18c, 18d. As illustrated with respect to seat 14a in FIG. 1B, each seat 14a-14d is supported on a frame 20, and includes foam cushions 22 and 24 on the seat bottom and back. The bladder 16a is disposed in or under the seat bottom cushion 22 substantially parallel with the seating surface, and preferably contains a fluid such as silicone which is non-corrosive, and not subject to freezing at extreme ambient temperatures.

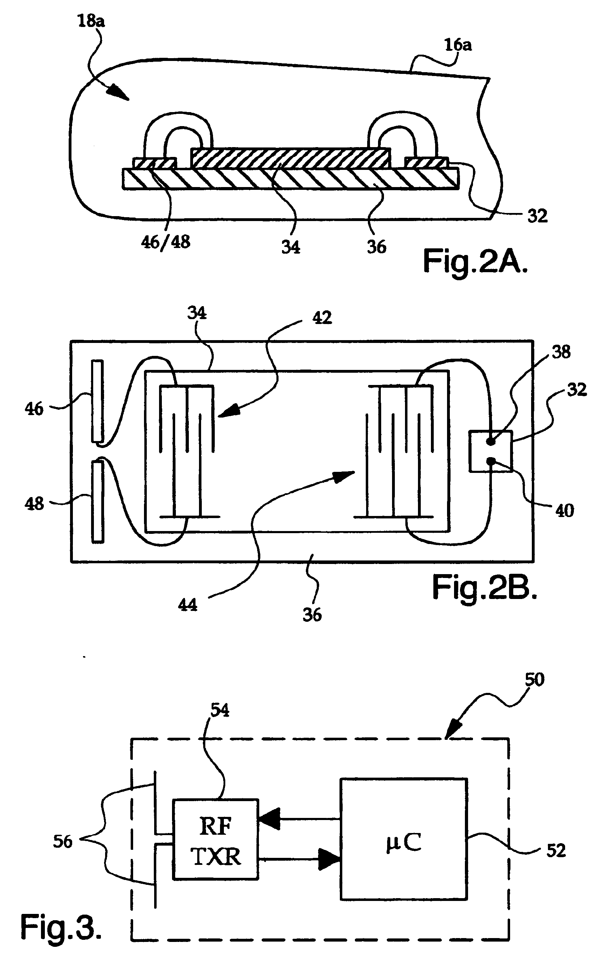

As illustrated with respect to passenger seat 14a in FIGS. 1B and 2A, each passive RF sensor 18a-18b is disposed within its respective seat bladder 16a-16d. The fluid pressure in each seat bladder 16a-16d varies in relation to the force applied to the seating surface of the respective seat 14a-14d by an occupant, and each passive RF sensor 18a-18d is responsive to the fluid pressure in which it is disposed. The occupant is typically a normally seated person, but may alternately be an infant or child car seat 26 as depicted in FIG. 1B. In the illustrated embodiment, the car seat 26 is equipped with a RFID tag device 28 as shown to facilitate its detection within the passenger compartment 10.

Referring to FIGS. 2A-2B, the passive RF sensor 18a includes a capacitive pressure sensor 32 and a surface acoustic wave (SAW) device 34 mounted on a substrate 36. Since the sensor 18a is immersed in the fluid of bladder 16a, it may be encapsulated in the form of a pellet or the like so that the components 32, 34 and substrate 36 do not contact the bladder fluid. The pressure sensor 32 is a passive device responsive to the fluid pressure in bladder 16a, and exhibits a characteristic capacitance across its terminals 38, 40 that varies in relation to the fluid pressure, and hence, the occupant-related force applied to the seating surface of seat 14a. A suitable capacitive pressure sensor for this purpose is described, for example, in the U.S. Patent No. 5,706,565, issued on January 13, 1998, and incorporated by reference herein. The SAW device 34 is a piezoelectric crystal imprinted with first and second spaced transducers 42 and 44. Each of the transducers 42, 44 has a pair of parallel linear terminals; a set of spaced conductor lines extend from each terminal toward the other terminal, and the conductor lines are interdigitated as indicated in FIG. 2B. The terminals of the first transducer 42 are connected to a set of antenna elements 46, 48 formed on the substrate 36, while the terminals of the second transducer 44 are connected to the terminals 38, 40 of capacitive pressure sensor 32. Communications to and from the SAW device 34 occur via antenna elements 46, 48 and the first transducer 42, while the capacitive impedance of the pressure sensor 32 variably loads the second transducer 44 in relation to the fluid pressure in bladder 16a. The first transducer 42 is tuned to resonate at characteristic fundamental RF frequency, and when excited by an RF interrogation signal, creates a surface acoustic wave in the piezoelectric crystal material of the SAW device 34. The surface acoustic wave propagates along the length of the SAW device 34 to the second transducer 44, and is then reflected back the first transducer 42. The frequency of the reflected surface acoustic wave differs from the fundamental frequency of the incident wave due to the capacitive loading of transducer 44 by the pressure sensor 32. The first transducer 42 converts the reflected surface acoustic wave to a corresponding RF electrical signal and the antenna elements 46, 48 transmit the RF signal as a response to the interrogation signal. The frequency shift of the RF response relative to the characteristic fundamental frequency of the SAW device 34 provides a measure of the fluid pressure in the respective seat bladder 16a-16d.

The final component of the passenger detection apparatus of this invention is an electronic control unit (ECU) 50 that is disposed in a central location in the passenger compartment 10, such as in a console between the seats 12 and 14a, or in a ceiling or dome lamp assembly of the compartment 10. As indicated by the arrows adjacent the ECU 50 in FIGS. 1A and 1B, the ECU 50 emits RF interrogation signals to the various passive sensors 18a-18d, and receives their RF responses. Referring to FIG. 3, the ECU 50 achieves this functionality with a micro-computer 52, a RF transceiver 54 and an antenna 56.

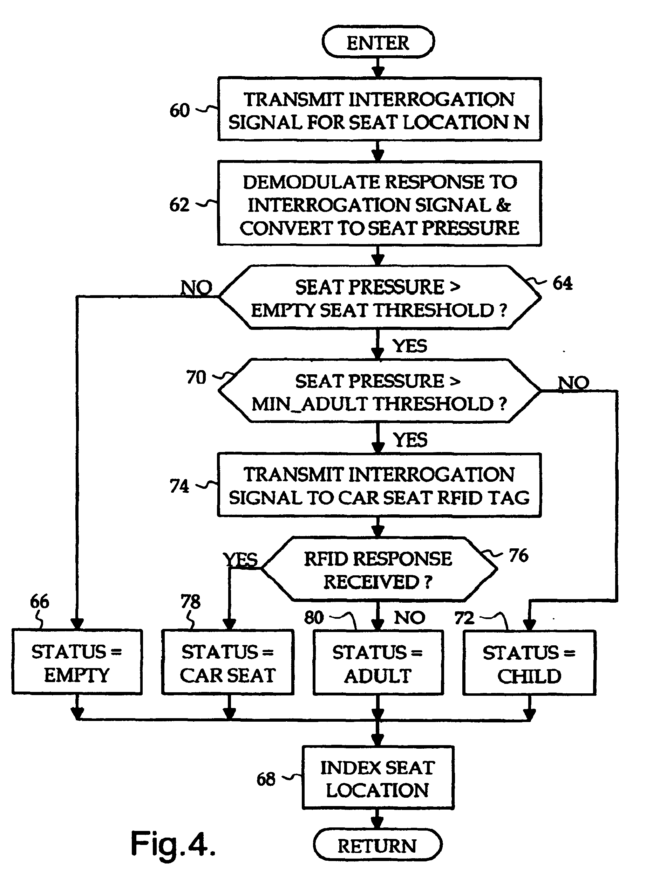

The flow diagram of FIG. 4 depicts software routine executed by the micro-computer 52 of ECU 50 according to a preferred embodiment of this invention. Block 60 activates RF transceiver 54 to transmit an interrogation signal to a selected seat location (seat location N). The block 62 demodulates the response received by transceiver 54 (a frequency shift) and converts the result to a corresponding seat pressure for the selected seat location. The blocks 64 and 66 set the status for seat location N to EMPTY if the seat pressure is less than an empty seat pressure threshold. If the seat pressure exceeds the empty seat pressure threshold, the block 70 compares the seat pressure to a minimum adult pressure threshold. If the seat pressure is less than the minimum adult pressure threshold, the block 72 sets the status for seat location N to CHILD. If the seat pressure exceeds the minimum adult pressure threshold, the block 74 activates RF transceiver 54 to transmit an interrogation signal to the car seat RFID tag 28. If a response is received (indicating the presence of car seat 26), the blocks 76 and 78 set the status for seat location N to CAR SEAT. If no RFID response is received, the block 80 sets the status for seat location N to ADULT. In cases where the car seat 26 is not equipped with an RFID tag 28, a car seat 26 can be distinguished from a normally seated adult occupant through some other means; for example, one or more of the seat bladders 18a-18d may be configured to be provide an indication of the seat force distribution, or the dynamic variation of seat force during movement of the vehicle may be monitored and compared to patterns characteristic of the two occupant categories. In any event, once the status for seat location N has been determined, the block 82 indexes the selected seat location and the above-described steps are repeated for another seating location, as indicated.

In summary, the present invention provides a reliable and easily installed apparatus for detecting the presence of occupants in a vehicle passenger compartment, and for identifying the presence and location of an infant or child car seat as well. The apparatus is inherently low in cost, as the sensors are inexpensive and passive, and no wiring is required between the sensors and the single-point ECU 50. While the invention has been described with respect to the illustrated embodiments, it is recognized that numerous modifications and variations in addition to those mentioned herein will occur to those skilled in the art. For example, the interrogation signal issued by ECU 50 can alternately be a global interrogation signal that induces resonance in the SAW device of each sensor 18a-18d; in such an embodiment, the ECU 50 receives the various responses and sorts them by frequency band in order to associate each received response with a corresponding seating location. Of course, various system parameters such as the number of monitored seating locations and the placement of ECU 50 may also be different than shown. Also, the passenger presence information obtained by ECU 50 can be used for purposes other than or in addition to scheduling deployment of restraint devices. Accordingly, it is intended that the invention not be limited to the disclosed embodiment, but that it have the full scope permitted by the language of the following claims.

## Claims

1. Apparatus for detecting presence of passengers in different seating locations (14a-14d) of a vehicle passenger compartment (10), comprising:
passive seat force sensors (18a-18d) disposed in each of the seating locations (14a-14d), each passive seat force sensor (18a-18) including a surface acoustic wave device (34) loaded by a passive sensor device (32); and
a controller (50) disposed in proximity to said seating locations (14a-14d) for issuing wireless interrogation signals (60) to the passive seat force sensors (18a-18d) disposed in said seating locations (14a-14d), receiving responses generated by said surface acoustic wave devices (34), obtaining seat force data from said responses (62), and detecting presence of passengers in the different seating locations (14a-14d) based on said seat force data.

2. The apparatus of claim 1, where said surface acoustic wave devices (34) have distinguishable fundamental resonance frequencies, and the response generated by a given surface acoustic wave (34) device differs from its fundamental resonance frequency in relation to a seat force sensed by the passive sensor device (32) loading the given surface acoustic wave device (34).

3. The apparatus of claim 1, further comprising:
a fluid-filled elastomeric bladder (16a-16d) for each of the seating locations (14a-14d), where the passive sensor device (32) in a given seating location (14a-14d) is responsive to a fluid pressure in the fluid-filled elastomeric bladder (16a-16d) for that seating location (14a-14d).

4. The apparatus of claim 3, wherein:
said passive sensor devices (32) exhibit capacitance that varies in relation to the fluid pressure in a respective fluid-filled elastomeric bladder (16a-16d) that loads the respective surface acoustic wave device (34) in relation to such fluid pressure.

5. The apparatus of claim 3, wherein:
the passive seat force sensors (32) in each of the seating locations (14a-14d) are disposed in the fluid-filled elastomeric bladders (16a-16d) for such seating locations (14a-14d).

6. The apparatus of claim 5, wherein the surface acoustic wave device (34) and passive sensor device (32) of each passive seat force sensor (18a-18d) are encapsulated in a pellet that is disposed in a respective fluid-filled elastomeric bladder (16a-16d).

7. The apparatus of claim 1, wherein:
said surface acoustic wave devices (34) have distinguishable fundamental resonance frequencies; and
said controller (50) successively issues wireless interrogation signals (60) to the passive seat force sensors (18a-18d) disposed in the different seating locations (14a-14d).

8. The apparatus of claim 1, wherein:
said surface acoustic wave devices (34) have distinguishable fundamental resonance frequencies; and
said controller (50) issues a global wireless interrogation signal (60) to said passive seat force sensors (18a-18d) and distinguishes responses from the different seating locations (14a-14d) by frequency band.

9. The apparatus of claim 1, wherein:
a car seat (26) equipped with an RFID tag (28) is present on a given seating location (14a-14d) of said vehicle passenger compartment (10); and
said controller (50) issues a wireless interrogation signal (74) to said RFID tag (28) to distinguish said car seat (26) from a normally seated occupant when said seat force data is insufficient to distinguish between a car seat and a normally seated occupant (70).
